# EUROPEAN PATENT APPLICATION

(11) **EP 3 839 279 A1**
(43) Date of publication of application: **23.06.2021**
(21) Application number: 19850686.7
(22) Date of filing: 01.08.2019
(51) Int. Cl.: F16C 33/46, F16C 19/26, F16C 33/66, F16H 1/28

(54) **RETAINER-EQUIPPED ROLLERS AND PLANETARY GEAR SUPPORT STRUCTURE**

(30) Priority: 17.08.2018 JP 2018153455
(71) Applicant: NTN Corporation, Osaka-shi, Osaka 550-0003 (JP)
(72) Inventor: TSUCHIYA, Masaru, Iwata-shi, Shizuoka 438-8510 (JP)
(74) Representative: Bockhorni & Brüntjen Partnerschaft Patentanwälte mbB
(86) International application number: PCT/JP2019/030240
(87) International publication number: WO 2020/036071

(57) **Abstract**

A roller and cage assembly includes: a cage (12) including a pair of rings (11) and a plurality of cage bars (21) extending in an axial direction and connecting the rings (11) to each other; and rollers disposed in pockets between the cage bars (21, 21) adjacent to each other in a circumferential direction. The cage bar (21) includes an end portion (22) and a middle portion located radially inward from the end portion (22). The end portion (22) has an outer retaining protrusion (25) formed therein, the outer retaining protrusion protruding into the pocket and configured to contact the roller to restrict radially outer movement of the roller. The end portion (22) of the cage bar (21) has an oil groove (31) in an inner peripheral surface (26) thereof, the oil groove extending in the circumferential direction and connecting to the outer retaining protrusion (25).

## Description

### Technical Field

The present invention relates to roller and cage assemblies and planetary gear support structures.

### Background Art

There is a technique that improves oil flow capability by forming oil flow grooves in the outer peripheral surface of a cage as a structure for lubricating a roller and cage assembly, as described in Japanese Unexamined Patent Publication No. 2015-078742 (Patent Literature 1). In a roller and cage assembly described in Japanese Utility Model No. 2584225 (Patent Literature 2), swaged grooves serving as oil reservoirs are formed in the outer and inner peripheral surfaces of a cage. There is also a technique that improves oil flow capability by forming oil flow grooves in the inner peripheral surface of a cage, as described in Japanese Unexamined Patent Publication No. 2007-255494 (Patent Literature 3).

### Citation List

### Patent Literatures

Patent Literature 1: Japanese Unexamined Patent Publication No. 2015-078742
Patent Literature 2: Japanese Utility Model No. 2584225
Patent Literature 3: Japanese Unexamined Patent Publication No. 2007-255494

### Summary of Invention

### Technical Problem

For example, roller and cage assemblies are used as bearings that support gears on gear shafts in automobile transmissions. Especially, recent transmissions have more gears for better fuel efficiency of automobiles, and there is a growing demand for planetary gear support structures using roller and cage assemblies. For better fuel efficiency of automobiles, there is also a trend to use less lubricating oil in transmissions and to use lubricating oil with low kinematic viscosity. In this case, less lubricating oil is supplied to roller and cage assemblies, and an oil film is less likely to be formed. Accordingly, at least outer retaining protrusions and rollers may directly contact each other with no oil film therebetween, and the outer retaining protrusions and the rollers may wear each other out.

One possible solution to this problem is to use the roller and cage assembly described in Patent Literature 3. However, the roller and cage assembly described in Patent Literature 3 is configured to supply lubricating oil from an oil supply hole formed in a support shaft for a planetary gear into a region between the cage and the support shaft, and is not intended for a configuration in which lubricating oil is supplied to the sliding contact portions between the rollers and the outer retaining protrusions.

In view of the above circumstances, it is an object of the present invention to provide a roller and cage assembly whose life can be prolonged even in a harsh lubrication environment.

### Solution to Problem

In order to achieve the above object, a roller and cage assembly according to the present invention includes: a cage including a pair of rings and a plurality of cage bars extending in an axial direction and connecting the rings to each other; and rollers disposed in pockets between the cage bars adjacent to each other in a circumferential direction. The cage bar of the cage includes an end portion located on an outer side in the axial direction and a middle portion located radially inward from the end portion. The end portion of the cage bar has an outer retaining protrusion formed therein, the outer retaining protrusion protruding into the pocket and configured to contact the roller to restrict radially outer movement of the roller. The end portion of the cage bar has an oil groove formed in an inner peripheral surface thereof, the oil groove extending in the circumferential direction and connecting to the outer retaining protrusion.

According to the present invention, lubricating oil flows through the oil groove formed in the inner peripheral surface of the end portion of each cage bar of the cage and is supplied to a contact portion between the outer retaining protrusion and the roller. An oil film is therefore formed on the contact portion, and direct contact between the outer retaining protrusion and a rolling surface is avoided. Wear of the outer retaining protrusion and the rolling surface of the roller is thus prevented. Even when the roller and cage assembly revolves around a central axis offset from an axis of the roller and cage assembly and the lubricating oil that lubricates the roller and cage assembly is subjected to a centrifugal force, the revolving motion and rotating motion of the roller and cage assembly cooperate to cause the lubricating oil to flow into the oil groove. This improves oil flow capability of the roller and cage assembly. Since the end portion of each cage bar is located radially outward from the middle portion thereof, the inner peripheral surface of the end portion of each cage bar does not contact an outer peripheral surface of a shaft and need not be ground. The groove depth is therefore not reduced like the conventional oil flow grooves. The present invention requires no oil retaining member and can be produced at low cost. Either only one oil groove or a plurality of oil grooves may be formed in one end portion. The oil groove extending in the circumferential direction may extend parallel to the circumferential direction or may extend obliquely with respect to the circumferential direction.

The depth and width of the oil groove are not limited. In one aspect of the present invention, the end portion of the cage bar has a recessed oil reservoir formed in the inner peripheral surface thereof, the oil reservoir connecting to the oil groove. According to this aspect, the lubricating oil is temporarily stored in the oil reservoir. Accordingly, even when the lubricating oil tends to flow out of the roller and cage assembly due to the centrifugal force, the oil flow capability of the roller and cage assembly is not reduced. The shape and number of oil reservoirs are not particularly limited. In another aspect, the end portion of the cage bar may have only the oil groove formed in the inner peripheral surface thereof.

In a preferred aspect of the present invention, the oil groove has a circumferential end formed in the outer retaining protrusion, the circumferential end extending in a radial direction. According to this aspect, the lubricating oil is supplied to the entire contact portion between the outer retaining protrusion and the rolling surface of the roller.

In another preferred aspect of the present invention, the circumferential end of the oil groove extends in the radial direction so as to extend through the outer retaining protrusion and connects to an outer peripheral surface of the end portion facing outward in the radial direction. In still another aspect, the circumferential end of the oil groove may be formed in the outer retaining protrusion but not connect to the outer peripheral surface of the end portion.

In one aspect, the roller and cage assembly of the present invention is disposed at a center of a planetary gear of a planetary gear support structure. The planetary gear support structure of the present invention is a planetary gear support structure including a ring gear, a sun gear disposed at a center of the ring gear, a plurality of planetary gears meshing with the ring gear and the sun gear, and a carrier supporting the planetary gears, the planetary gears being rotatably supported on support shafts provided on the carrier via rolling bearings. The rolling bearing for the support shaft is the roller and cage assembly described above.

### Advantageous Effects of Invention

As described above, the present invention provides a roller and cage assembly whose life can be prolonged even in a harsh lubrication environment and a planetary gear support structure including the roller and cage assembly.

### Brief Description of Drawings

[FIG. 1] FIG. 1 schematically illustrates a planetary gear support structure using roller and cage assemblies according to the present invention, where FIG. 1(A) is an overall view and FIG. 1(B) is a sectional view of a planetary gear support shaft.
[FIG. 2] FIG. 2 is a perspective view of a roller and cage assembly that is an embodiment of the present invention.
[FIG. 3] FIG. 3 is a perspective view illustrating only a cage of the embodiment.
[FIG. 4] FIG. 4 is a longitudinal section of the cage of the embodiment.
[FIG. 5] FIG. 5 is an enlarged perspective view of a circled portion in FIG. 4.
[FIG. 6] FIG. 6 is an enlarged perspective view of another embodiment of the present invention.
[FIG. 7] FIG. 7 is an enlarged perspective view of still another embodiment of the present invention.
[FIG. 8] FIG. 8 is an enlarged perspective view of a modification of the embodiment of FIG. 7.

### Description of Embodiments

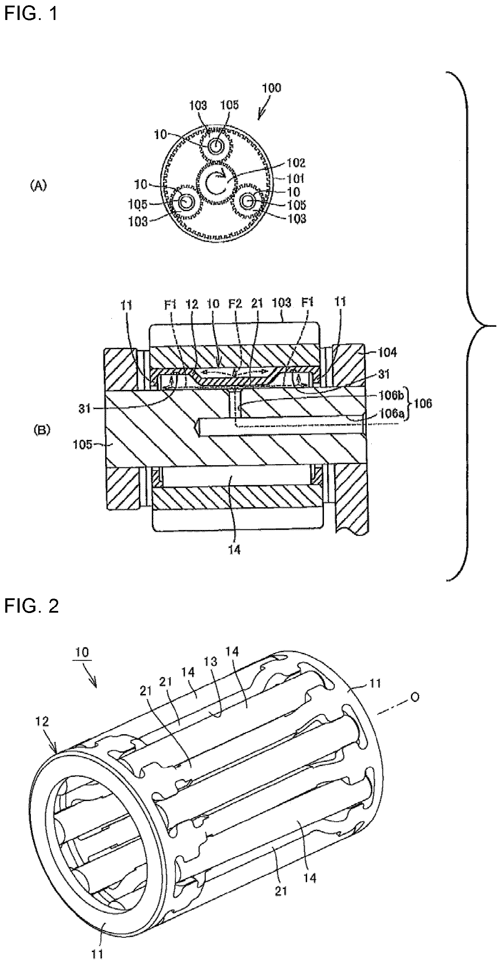

Embodiments of the present invention will be described in detail with reference to the accompanying drawings. First, an overview of a planetary gear support structure 100 using needle roller and cage assemblies (hereinafter simply referred to as the roller and cage assemblies) 10 of an embodiment will be given with reference to FIGS. 1(A) and 1(B). The planetary gear support structure 100 includes a ring gear 101, a sun gear 102, a plurality of planetary gears 103, a carrier 104, a plurality of support shafts 105, and the roller and cage assemblies 10. The planetary gear support structure 100 is used in, e.g., automobile transmissions etc., and the roller and cage assemblies 10 are used in order to rotatably support the planetary gears 103 in the planetary gear support structure 100. That is, the roller and cage assemblies 10 of the present embodiment are roller and cage assemblies for automobiles.

The sun gear 102 is disposed coaxially inside the ring gear 101. The planetary gears 103 are disposed radially inward from the ring gear 101 and radially outward from the sun gear 102 and mesh with the ring gear 101 and the sun gear 102. The plurality of support shafts 105 is fixed to the carrier 104. Each support shaft 105 is inserted through a center hole of the planetary gear 103. Each roller and cage assembly 10 of the present embodiment is disposed between the inner peripheral surface of the planetary gear 103 and the outer peripheral surface of the support shaft 105. Each roller and cage assembly 10 serves as a rolling bearing and rotatably supports the planetary gear 103.

The planetary gears 103 can revolve around the sun gear 102 while rotating. The carrier 104 is disposed coaxially with the sun gear 102 and can rotate. The carrier 104 is rotated by the revolution of the planetary gears 103 or causes the planetary gears 103 to revolve around the sun gear 102. The planetary gears 103 and the roller and cage assemblies 10 are subjected to a centrifugal force about the sun gear 102.

Referring to FIG. 1B, each planetary gear 103 is rotatably supported on the support shaft 105 via the roller and cage assembly 10 according to the present embodiment. That is, each roller and cage assembly 10 rotatably supports the planetary gear 103 on the support shaft 105. Specifically, each roller and cage assembly 10 is composed of, e.g., a single cage 12 and a plurality of rollers 14, with the outer peripheral surface of the support shaft 105 serving as an inner raceway surface and the inner peripheral surface of the center hole of the planetary gear 103 serving as an outer raceway surface. The cage 12 of the present embodiment is of a type that is guided by its outer peripheral surface. The rollers 14 of the present embodiment are needle rollers.

An oil flow hole 106 for supplying lubricating oil is formed in the support shaft 105. The roller and cage assembly 10 is lubricated by guiding the lubricating oil to the outer peripheral surface of the support shaft 105 through the oil flow hole 106 formed in the support shaft 105. Specifically, the oil flow hole 106 includes a first oil flow hole 106a extending in the axial direction from the right side of the paper of FIG. 1 and a second oil flow hole 106b extending in the radial direction from near the middle in the axial direction of the support shaft 105 to the outer peripheral surface of the support shaft 105. The lubricating oil supplied through the oil flow holes 106a, 106b of the support shaft 105 lubricates rolling surfaces of the rollers 14, flows to both sides in the axial direction along the inner peripheral surface of the cage 12 as shown by arrows F1 in FIG. 1(B). The lubricating oil then flows between the inner periphery of each ring 11 of the cage 12 and the outer periphery of the support shaft 105 and flows to the outside. Similarly, the lubricating oil supplied through the oil flow holes 106a, 106b of the support shaft 105 flows radially outward through clearances between cage bars 21 of the cage 12 and the rollers 14 as shown by arrows F2 in FIG. 1(B) and lubricates the inner peripheral surface of the center hole of the planetary gear 103.

When the planetary gear support structure 100 is used for automobile transmissions having more gears, less lubricating oil is supplied to the roller and cage assemblies 10 or lubricating oil with lower viscosity is supplied to the roller and cage assemblies 10 in some cases in order to further improve fuel efficiency of automobiles. The kinematic viscosity of the lubricating oil that is used to improve fuel efficiency of automobiles is, e.g., 2 centistokes (cSt) to 8 centistokes (cSt) at 100°C.

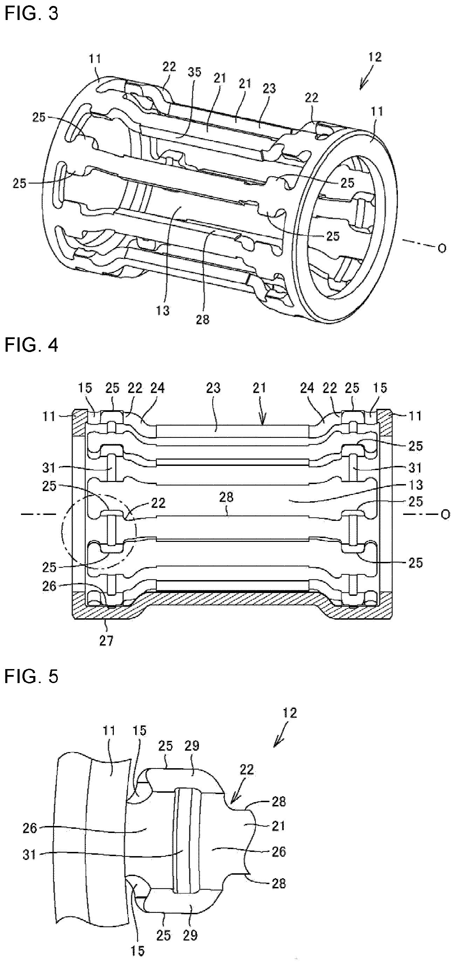

FIG. 2 is a perspective view of the roller and cage assembly 10 that is the embodiment of the present invention. FIG. 3 is a perspective view illustrating only the cage of the embodiment. FIG. 4 is a longitudinal section of the cage of the embodiment, illustrating the cage cut along a plane including the centerline of the cage.

Referring to FIG. 2, the roller and cage assembly 10 includes: the cage 12 having the pair of rings 11, 11 and the plurality of cage bars 21 extending in an axis O direction and connecting the rings 11, 11 to each other; and the needle rollers 14 disposed in each pocket 13 between the cage bars 21, 21. The axis O is the centerline of the roller and cage assembly 10 and is the same as the centerline of the cage 12. In the following description, the "radial direction" refers to a direction perpendicular to the axis O, and the "circumferential direction" refers to a direction along an arc centered on the axis O.

The pair of rings 11, 11 and the cage bars 21, 21 adjacent to each other in the circumferential direction define the pocket 13. Since each side surface of the cage bar 21 defines the pocket 13, the side surfaces of the cage bars 21 are also referred to as pocket wall surfaces 28.

The support shaft 105 is passed through the center of the roller and cage assembly 10. The roller and cage assembly 10 is disposed inside a housing (planetary gear 103) (see FIG. 1). The needle rollers 14 roll on the outer peripheral surface of the support shaft 105 and the inner peripheral surface of the housing (planetary gear 103).

Referring to FIGS. 3 and 4, each cage bar 21 includes end portions 22, a middle portion 23, and tilted portions 24. The middle portion 23 is the middle part in the axis O direction of the cage bar 21. The middle portion 23 has inner retaining protrusions 35 that restrict radially inward movement of the needle rollers 14. The end portion 22 is an end in the axis O direction of the cage bar 21 and connects to the ring 11. The tilted portion 24 is a portion between the middle portion 23 and the end portion 22.

Referring to FIG. 4, the middle portion 23 of each cage bar 21 is located closer to the axis O, and the end portions 22 of each cage bar 21 are located farther from the axis O. The cage bar 21 (end portions 22, middle portion 23, tilted portions 24) has an inner peripheral surface facing radially inward and an outer peripheral surface facing radially outward. The radius of the inner peripheral surface of the middle portion 23 is equal to or smaller than that of the inner peripheral surface of the ring 11.

The middle portion 23 extends straight and parallel to the axis O and connects at both ends to the inner ends in the axis O direction of the tilted portions 24. Each tilted portion 24 is tilted such that its outer end in the axis O direction is located radially outward from its inner end in the axis O direction. The outer end in the axis O direction of each tilted portion 24 connects to the end portion 22. Each end portion 22 extends straight and parallel to the axis O. When looking at one cage bar 21 shown in FIG. 4, the end portions 22, 22 that are both ends in the axis O direction of the cage bar 21 are located radially outward from the middle portion 23 that is the middle part in the axis O direction of the cage bar 21, and connect to the outer peripheral edges of the rings 11, 11. Since the cage bar 21 has an M shape, the cage 12 is also called an M-shaped cage. The radius of the outer peripheral surface of each end portion 22 is the same as that of the outer peripheral surface of the ring 11. Each end portion 22 has outer retaining protrusions 25.

FIG. 5 is an enlarged perspective view of a portion circled by a long dashed short dashed line in FIG. 4 and illustrates the end portion 22 and the outer retaining protrusions 25 in an enlarged view. The outer retaining protrusions 25 protrude in the circumferential direction from the pocket wall surfaces 28 of the cage bar 21. The protruding height of each outer retaining protrusion 25 gradually increases so as to be smallest on the inner side in the radial direction and largest on the outer side in the radial direction. Each outer retaining protrusion 25 therefore forms a tilted contact surface 29 that contacts the rolling surface of the needle roller 14.

The distance between the outer retaining protrusions 25, 25 facing each other with the pocket 13 therebetween is smaller than the diameter of the needle roller 14 (FIG. 2). The outer retaining protrusions 25 thus prevent the needle rollers 14 from coming off outward in the radial direction. When the needle rollers 14 move outward in the radial direction, the contact surfaces 29 of the outer retaining protrusions 25 come in contact with the rolling surfaces of the needle rollers 14 to restrict the radially outward movement of the needle rollers 14. The outer retaining protrusions 25 are separated from the rings 11, and recesses 15 are formed between each ring 11 and the outer retaining protrusions 25.

In the cage 12 of the type that is guided by its outer peripheral surface, outer peripheral surfaces 27 of the end portions 22 and/or outer peripheral surfaces of the rings 11 of the cage 12 are ground. This improves wear resistance of the outer peripheral surface of the cage 12. Inner peripheral surfaces 26 of the end portions 22 of the cage 12 need not be ground.

An oil groove 31 is formed in the inner peripheral surface 26 of each end portion 22. The width of the oil groove 31 is smaller than the dimension in the axis O direction of the outer retaining protrusion 25 and is constant. The width of the oil groove 31 is preferably in the range of 10% or more and 50% or less of the dimension in the axis O direction of the outer retaining protrusion 25 in view of the capability of holding the lubricating oil and supply of the lubricating oil to the outer retaining protrusions 25.

The oil groove 31 extends in the circumferential direction of the cage 12 and connects to the outer retaining protrusions 25. The depth of the oil groove 31 is constant. The depth of the oil groove 31 is preferably in the range of 5% or more and 50% or less of the thickness dimension of the end portion 22. The thickness dimension of the end portion 22 is the thickness from the inner peripheral surface 26 to the outer peripheral surface 27 of the end portion 22 shown in FIG. 4.

The oil groove 31 is located inward from the recesses 15 in the axis O direction and outward from the tilted portion 24 (FIG. 4) in the axis O direction. The circumferential ends of each oil groove 31 connect to the contact surfaces 29 of the outer retaining protrusions 25. In other words, the oil groove 31 connects at its circumferential ends to the pockets 13. Since the oil groove 31 is formed in each end portion 22, the oil grooves 31 are located intermittently along the entire circumference of the cage 12 (FIG. 4).

Referring back to FIGS. 2 to 5, the roller and cage assembly 10 of the present embodiment includes the cage 12 and the plurality of needle rollers 14. During rotation of the roller and cage assembly 10, the contact surfaces 29 of the outer retaining protrusions 25 may come into contact with the rolling surfaces of the needle rollers 14 with a large surface pressure due to the centrifugal force. Moreover, the lubricating oil may stay in a region in the circumferential direction of the roller and cage assembly 10 due to the centrifugal force, and it may be difficult to lubricate other region in the circumferential direction of the roller and cage assembly 10.

According to the present embodiment, the cage 12 has the oil grooves 31 in the inner peripheral surfaces 26. When the roller and cage assembly 10 placed in annular clearance between the housing and the shaft is in use, the lubricating oil flows through the oil grooves 31 to lubricate the caged roller and cage assembly 10. The oil grooves 31 provide sufficient oil flow capability along the entire circumference of the roller and cage assembly 10. The oil grooves 31 connect at their circumferential ends to the contact surfaces 29 of the outer retaining protrusions 25. An oil film is therefore formed on each contact surface 29, and the oil film on each contact surface 29 will not break. Direct contact between the outer retaining protrusions 25 and the rolling surfaces of the needle rollers 14 is thus avoided, and wear of the outer retaining protrusions 25 and the rolling surfaces of the needle rollers 14 is prevented.

As described above, according to the roller and cage assembly 10 of the present embodiment, the lubricating oil is easily supplied to the outer retaining protrusions 25 and the life of the roller and cage assembly 10 is prolonged. The roller and cage assembly 10 of the present embodiment is therefore very effective when applied to planetary gear support structures of automobile transmissions where the lubrication environment for bearings is becoming harsh with improvement in fuel efficiency of automobiles.

If no oil film is formed on the surface of the cage, the cage wears due to direct contact with the rollers. The worn portions of the cage, such as the outer retaining protrusions and the inner retaining protrusions of the cage, have increased surface roughness, and the rolling surfaces of the rollers contact very small protrusions on the worn portions. When this happens, the rolling surfaces of the rollers are repeatedly subjected to high pressures from the roughened portions, specifically from, e.g., the very small protrusions on the surfaces of the outer retaining protrusions and the inner retaining protrusions. As a result, very small spalls develop on the rolling surfaces of the rollers. This phenomenon is called peeling. Peeling tends to occur on the inner raceway surface that is the outer peripheral surface of the shaft and those parts of the rolling surfaces of the rollers which contact the outer retaining protrusions as the inner raceway surface and these parts of the rolling surfaces of the rollers are subjected to high contact surface pressures. Such very small spalls develop into large spalls on the rolling surfaces of the rollers. As a result, noise and vibration are generated by the planetary gear support structure.

According to the present embodiment, when the cage 12 is of the type that is guided by its outer peripheral surface, the outer peripheral surfaces 27 of the end portions 22 are ground, but the inner peripheral surfaces 26 of the end portions 22 in which the oil grooves 31 are formed are not ground. Accordingly, the depth of the oil grooves 31 is not reduced. Grinding the outer peripheral surface of the cage 12 is less costly than grinding the inner peripheral surface of the cage 12 and is also applicable to a cage 12 with a small diameter.

Referring to FIG. 4, the oil grooves 31 are located inward from the rings 11 in the axis O direction. The lubricating oil held in the oil grooves 31 are therefore less likely to flow over the rings 11 to the outside of the roller and cage assembly 10. The roller and cage assembly 10 thus has improved lubricating performance.

Referring to FIG. 1, even when the roller and cage assembly 10 revolves around the sun gear 102 and the lubricating oil for lubricating the roller and cage assembly 10 is subjected to the centrifugal force, the revolving motion and rotating motion of the roller and cage assembly 10 cooperate to cause the lubricating oil to flow into the oil grooves. The roller and cage assembly 10 thus has improved oil flow capability.

A method for manufacturing the cage 12 is as follows.

First, strip steel is prepared. Next, a reduced diameter portion is formed in the middle in the lateral direction of the strip steel with a forming roll. The resultant strip steel is then punched in the thickness direction with a press machine to form the pockets 13. Thereafter, the outer retaining protrusions 25 and the contact surfaces 29 are formed with the press machine. Subsequently, the resultant strip steel is cut into strips. Each strip is bent into a cylindrical shape, and the ends of the strip are joined by welding. The reduced diameter portion forms the middle portions 23 of the cage bars 21. The oil grooves 31 can be formed simultaneously with the reduced diameter portion. Oil reservoirs 32 can be formed simultaneously with the outer retaining protrusions 25 and the contact surfaces 29. Circumferential ends 34 can be formed simultaneously with the outer retaining protrusions 25 and the contact surfaces 29. Circumferential ends 33 can be formed simultaneously with the pockets 13. In each of the embodiments of the present invention, the process of forming the outer retaining protrusions 25 and the process of forming the oil grooves 31 are separate processes. Design flexibility of both the outer retaining protrusions 25 and the oil grooves 31 is therefore increased, and the shape and dimensions of the oil grooves 31 can be set according to the supply flow rate of the lubricating oil.

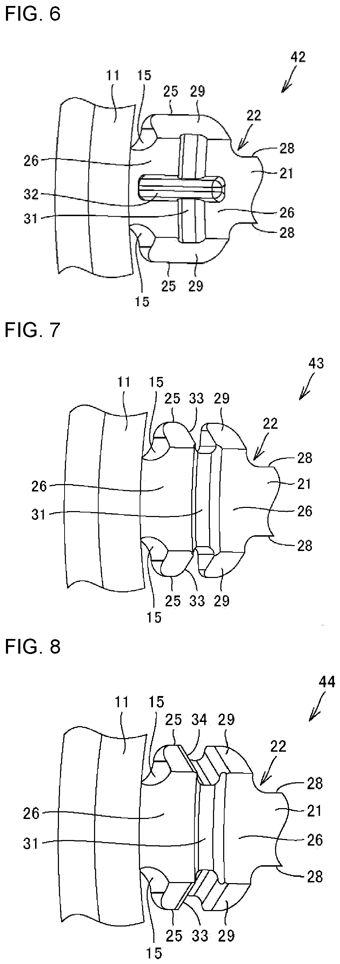

Next, a roller and cage assembly according to another embodiment of the present invention will be described with reference to FIG. 6. FIG. 6 is an enlarged perspective view of a cage of this embodiment and illustrates an end portion of a cage bar as viewed from the inside in the radial direction. In the embodiment of FIG. 6, the same configurations as those of the above embodiment are denoted with the same reference characters, and description thereof will be omitted. Configurations different from those of the above embodiment will be described. In a cage 42 of this embodiment, a single recessed oil reservoir 32 is formed in the inner peripheral surface 26. The oil reservoir 32 is in the shape of a groove and extends in the axis O direction. The oil reservoir 32 connects to the oil groove 31. The groove depth of the oil reservoir 32 is preferably in the range of 5% or more and 50% or less of the thickness dimension of the end portion 22. The groove depth of the oil reservoir 32 is preferably equal to or greater than that of the oil groove 31. The shapes of the oil reservoir 32 and the oil groove 31 are not limited to those in the illustrated embodiment, and the oil reservoir 32 and the oil groove 31 may have other shapes.

According to this embodiment, lubricating oil can be held in the oil reservoir 32. The roller and cage assembly 10 is therefore lubricated even when supply of the lubricating oil from the outside of the roller and cage assembly 10 to the roller and cage assembly 10 is reduced for some reason.

Next, a roller and cage assembly according to still another embodiment of the present invention will be described with reference to FIG. 7. FIG. 7 is an enlarged perspective view of a cage 43 of this embodiment and illustrates an end portion of a cage bar as viewed from the inside in the radial direction. In the embodiment of FIG. 7, the same configurations as those of the above embodiments are denoted with the same reference characters, and description thereof will be omitted. Configurations different from those of the above embodiments will be described. In this embodiment, circumferential ends 33 of the oil groove 31 are formed in the contact surfaces 29 of the outer retaining protrusions 25 and extend in the radial direction. The circumferential ends 33 of the oil groove 31 extend along the contact surfaces 29, extend in the radial direction so as to extend through the outer retaining protrusions 25, and connect to the outer peripheral surface 27 (FIG. 4) of the end portion 22 facing outward in the radial direction.

Each outer retaining protrusion 25 is divided into an axial inner portion and an axial outer portion by the circumferential end 33. The groove depth of the circumferential end 33 is small on the inner side in the radial direction and increases as it gets closer to the outer side in the radial direction. The circumferential end 33 has such a groove depth because the amount by which the outer retaining protrusion 25 protrudes is small on the inner side in the radial direction and increases as it gets closer to the outer side in the radial direction.

According to this embodiment, since the circumferential ends 33 of the oil groove 31 extend through the outer retaining protrusions 25, more lubricating oil is supplied to the contact surfaces 29 of the outer retaining protrusions 25.

Next, a roller and cage assembly, which is a modification of the embodiment of FIG. 7, will be described with reference to FIG. 8. FIG. 8 is an enlarged perspective view of a cage 44 of the modification and illustrates an end portion of a cage bar as viewed from the inside in the radial direction. In the modification of FIG. 8, the same configurations as those of the above embodiments are denoted with the same reference characters, and description thereof will be omitted. Configurations different from those of the above embodiments will be described. In the modification, the groove depth of each circumferential end 34 of the oil groove 31 is constant along its entire length in the radial direction. That is, each circumferential end 34 is tilted along the contact surface 29. The groove width of the circumferential end 34 is preferably in the range of 10% or more and 50% or less of the dimension in the axis O direction of the outer retaining protrusion 25 in view of the capability of holding the lubricating oil and supply of the lubricating oil to the outer retaining protrusion 25.

According to the modification, since the circumferential ends 34 have a constant groove depth, the lubricating oil is stably supplied to the contact surfaces 29 of the outer retaining protrusions 25.

Although the embodiments of the present invention are described above with reference to the drawings, the present invention is not limited to the illustrated embodiments. Various alterations and modifications can be made to the illustrated embodiments without departing from the spirit and scope of the present invention. For example, a part of the configurations of one of the above embodiments and another part of the configurations of another one of the above embodiments may be combined.

### Reference Signs List

- 10: Roller and Cage Assembly
- 11: Ring
- 12: Cage
- 13: Pocket
- 21: Cage Bar
- 22: End Portion
- 23: Middle Portion
- 25: Outer Retaining Protrusion
- 26: Inner Peripheral Surface
- 29: Contact Surface
- 31: Oil Groove
- 32: Oil Reservoir
- 33: Peripheral End of Oil Groove
- 100: Planetary Gear Support Structure
- 101: Ring Gear
- 102: Sun Gear
- 103: Planetary Gear
- 105: Planetary Gear Support Shaft
- O: Axis

## Claims

1. A roller and cage assembly, comprising:
a cage including a pair of rings and a plurality of cage bars extending in an axial direction and connecting the rings to each other; and
rollers disposed in pockets between the cage bars adjacent to each other in a circumferential direction, wherein
the cage bar includes an end portion located on an outer side in the axial direction and a middle portion located radially inward from the end portion,
the end portion has an outer retaining protrusion formed therein, the outer retaining protrusion protruding into the pocket and configured to contact the roller to restrict radially outer movement of the roller, and
the end portion has an oil groove formed in an inner peripheral surface thereof, the oil groove extending in the circumferential direction and connecting to the outer retaining protrusion.

2. The roller and cage assembly according to claim 1, wherein the end portion has a recessed oil reservoir formed in the inner peripheral surface thereof, the oil reservoir connecting to the oil groove.

3. The roller and cage assembly according to claim 1 or 2, wherein
the oil groove has a circumferential end formed in the outer retaining protrusion, the circumferential end extending in a radial direction.

4. The roller and cage assembly according to claim 3, wherein
the circumferential end of the oil groove extends in the radial direction so as to extend through the outer retaining protrusion and connects to an outer peripheral surface of the end portion facing outward in the radial direction.

5. A planetary gear support structure including a ring gear, a sun gear disposed at a center of the ring gear, a plurality of planetary gears meshing with the ring gear and the sun gear, and a carrier supporting the planetary gears, the planetary gears being rotatably supported on support shafts provided on the carrier via rolling bearings, wherein
the rolling bearing is the roller and cage assembly according to any one of claims 1 to 4.
